# EUROPEAN PATENT APPLICATION

(11) **EP 4 428 687 A1**
(43) Date of publication of application: **11.09.2024**
(21) Application number: 23160984.3
(22) Date of filing: 09.03.2023
(51) Int. Cl.: G06F 9/50, G06F 12/0888

(54) **SYSTEM AND METHOD FOR OPTIMAL SERVERLESS DEPLOYMENT OF ANALYTICS TASKS ACROSS HIERARCHICAL EDGE NETWORK**

(71) Applicant: ABB SCHWEIZ AG, 5400 Baden (CH)
(72) Inventor: SARKAR, Santonu, 560076 Bangalore (IN); PLATENIUS-MOHR, Marie, 69493 Hirschberg an der Bergstraße (DE); SCHLAKE, Jan Christoph, 64293 Darmstadt (DE); AMARLINGAM, Madapu, 501102 Vikarabad (IN); ESKANDANI, Nafise, 64380 Rossdorf (DE); BORRISON, Reuben, 68723 Schwetzingen (DE)
(74) Representative: Maiwald GmbH

(57) **Abstract**

A computer-implemented method (100) for orchestrating the execution of a given set of compute workloads (11-16) on a given set of compute nodes (21-23), comprising the steps of:
• determining (110), for each workload (11-16), a set of requirements (11a-16a) for resources needed for execution of the workload (11-16), wherein the resources comprise at least memory, as well as a frequency (11b-16b) of usage;
• determining (120), for each compute node (21-23), an availability (21a-23a) of the resources required by the workloads (11-16);
• establishing (130) multiple candidate configurations (31-35), wherein each candidate configuration (31-35) comprises an assignment of each compute workload (11-16) to at least one pair of a compute node (21-23) and a working class (41-43), such that the resource requirements of all workloads (11-16) are satisfied, wherein different working classes (41-43) differ at least in the degree of retention of the compute workload (11-16) in memory and/or in at least one cache of the compute node (21-23) after execution;
• computing (140), for each candidate configuration (31-35), at least one figure of merit (31a-35a) with respect to at least one given optimization goal (5); and
• determining (150) a candidate configuration (31-35) with the best figure of merit (31a-35a) as the optimal configuration (3).

## Description

### FIELD OF THE INVENTION

The invention relates to the serverless deployment of analytics tasks across hierarchical edge networks. In particular, the hierarchical edge network may be on an edge of an industrial plant, and the analytics tasks may operate on data gathered from this industrial plant.

### BACKGROUND

Today, even a middle-sized industrial plant consists of hundreds or even thousands of smart field devices. Edge Computing allows to collect this data on edge devices close to the source of the data to do low-latency analytics on-premise and/or to preprocess and filter data before sending it from the edge to the cloud. To deal with the high load generated by many devices, there should not only be one edge node for one plant, but multiple. Field devices are connected one (or multiple) nearby edge nodes to send their data there. A cluster of such lower-level, edge nodes is managed by a higher-level edge, able to collect data from multiple lower-level edge nodes and to establish a connection to the cloud.

Analytics tasks to be done within the edge network usually involve data from various devices at the same time. To keep the communication efficient, in order to be able to deliver fast responses, it is essential to deploy the analytics tasks on the edge nodes most optimal for each task based on the data coming from the devices and wrt. to keeping transmission overhead and latency low. Some tasks are only dependent on local data and may be deployed on lower-level edges, while others may need data/information available on multiple edges and, thus, need to be deployed on a higher-level edge. The problem may be even more complicated as some tasks may be more time-critical or in other ways more critical than others, while some edge nodes may be more resource-constrained or more loaded than others. The whole topology may even change dynamically, as devices or edge nodes may be added to or removed from the plant over time.

All in all, the procedure of deciding for a smart deployment depends on many factors. Thus, it would be too error-prone and time-consuming to be performed manually by a human operator. In addition, bad deployment solutions would slow down the complete system and make the corresponding processes less reliable in the end.

### OBJECTIVE OF THE INVENTION

It is therefore an objective of the invention to facilitate the orchestrating of a given set of compute workloads on a given set of compute workloads, and to achieve a better performance when executing such workloads.

This objective is achieved by a method according to the independent claim. Further advantageous embodiments are detailed in the dependent claims.

### DISCLOSURE OF THE INVENTION

The invention provides a computer-implemented method for orchestrating the execution of a given set of compute workloads on a given set of compute nodes. In particular, the compute workloads may be packaged in a standardized form that allows deployment on whatever compute node the orchestrating entity decides, such as Docker or Kubernetes containers. But the compute workloads may also, for example, just comprise lines of interpretable code to be executed on certain data. The compute nodes provide respective execution environments for the workloads.

In the course of the method, for each workload, a set of requirements for resources needed for execution of the workload is determined. These resources comprise at least memory.

Another important resource that may be relevant, in particular, for data analytics tasks in an industrial environment is data availability. The speed at which a stream of new data can be supplied to the workload may well be a limiting factor for the performance of the workload. I.e., if data availability is too low, the workload may run out of new data to process and fall idle. In particular, data availability may comprise the availability of data locally at the compute node on which the workload is executed, and may, for example, be specified in a terms of a to-be-ingested amount of data per unit time. But depending on the available network connectivity, alternatively or in combination to this, a requirement for data availability may also, for example, be specified in terms of a network connectivity towards the source of data that the compute node executing the workload needs to have. For example, a type or speed of the network connection of the compute node, and/or a maximum number of hops between the compute node and the source of data, may be specified.

In particular, data analytics may require the data on-demand to perform a real-time analytics. Since a typical industrial plant comprises many data sources, the edge network in the plant receives massive amounts of data in real time. These data may be stored in different edge nodes. For example, where there is a choice of where to store the data, the edge node with the highest-bandwidth and/or lowest-latency connectivity to the data source may be chosen. Once the data is stored on one edge node, it may be computationally expensive to move it to another node.

This means that it is advantageous to deploy the task where the data is available quickly. In fact, the concept of "Near Data Computing" is an active field of research. For example, work being done by UCLA (https://vast.cs.ucla.edu/projects/near-data-computing) strives to ensure that the data movement for computing purposes is limited if not completely eliminated. However, this is achieved by means of a different type of storage infrastructure: the edge nodes are going to have more traditional storage infrastructure. By contrast, the present invention starts from a given topology of compute nodes and storage.

Thus, in a particularly advantageous embodiment, the resources needed for execution of the workload further comprise: network communication resources and/or input data to be processed by the workload.

There may be more resources that a workload can ask for. For example, the workload may request that it is deployed with redundancy, so that, if one compute node executing the workload fails, another one can seamlessly take over. In another example, the workload may request that it is deployed on a node that offers backup of data, or any other extra functionality or feature.

Furthermore, a frequency of usage of each workload is determined. Herein, the term "frequency" is not to be construed narrowly as in Physics, but rather broadly as any quantity that comprises some notion of how often the workload needs to be executed. For example, it may be determined
- how often the workload will be called per unit time; and/or
- how long a temporal gap between one completion of the workload and the next request for execution of the workload is expected to be.

For each compute node, an availability of the resources required by the workloads is determined. This availability may, for example, correspond to the physically available resources on the compute node, minus the amount of the respective resources that has already been allotted to other workloads. But the availability may also, for example, depend on the identity of the requesting entity, so as to make certain compute nodes accessible to important requesting entities only. Also, availability may be specified not only in terms of a maximum amount of resources, but also in terms of a minimum amount of resources. In this manner, it can be avoided that a large resource is shared among many very small workloads, rather than being used by a large workload that really needs this large resource. For example, in an environment where machine learning models are deployed on compute nodes having GPUs with 8 GB VRAM and compute nodes having GPUs with 24 GB VRAM, the latter compute nodes may be made available only for workloads that require in excess of 8 GB VRAM. This avoids the 24 GB VRAM of the larger GPUs to be cluttered with a lot of jobs that require only 2 or 4 GB of VRAM. Those jobs should flock to the 8 GB VRAM GPUs.

Multiple candidate configurations are established. Each candidate configuration comprises an assignment of each compute workload to at least one pair of a compute node and a working class. Different working classes differ at least in the degree of retention of the compute workload in memory, and/or in at least one cache of the compute node, after execution. For every candidate configuration, it is a requirement that it the resource requirements of all workloads are satisfied. I.e., when this configuration is deployed, every workload gets its required resources.

For each candidate configuration, at least one figure of merit is computed with respect to at least one given optimization goal. A candidate configuration with the best figure of merit is determined as the optimal configuration.

Herein, the grouping of workloads into working classes that differ in the degree of retention of the respective workload in memory and/or in at least one cache is an important tool that may be leveraged to serve different optimization goals.

In one example, the optimization goal may be the overall execution speed of a given set of compute workloads that are executed in a repetitive manner. In particular, data analytics tasks in industrial plants are frequently meant to provide a constant surveillance of the process executed by the industrial plant, which means that the same workloads will be executed time and time again. In an ideal world, the fleet of compute nodes together would have so much memory that each and every workload could be kept in memory of its respective compute node. Then, each workload would have to be loaded from mass storage into memory only once, and could then be called again in memory when needed the next time. This would be somewhat akin to in-memory databases that do all their work in fast memory and avoid using slow mass storage whenever possible. But in real industrial applications, so much memory is not available, so some workloads inevitably will have to be evicted from memory. With the present method, in a setting where different workloads will need to be executed with different frequencies, a fastest execution time that is possible under the constraint of the limited memory may be achieved.

In another example, the optimization goal may be the overall amount of hardware needed for the compute nodes under the constraint that the speed of executing certain jobs does not fall below a required level.

It should be noted that the overhead saved when a workload is retained in memory is larger than the time required to just load the workload from mass storage into memory again. In particular, if workloads are containerized for a standardized deployment, the execution of a workload that is not yet in memory requires instantiating and initializing a new execution environment for the workload. This effort is lost when the execution environment is evicted from memory. So a fair amount of resources might actually go into the spinning up and spinning down of execution environments.

Whatever optimization goal is used, the optimization problem is a mixed-integer problem because the choice on which compute node to deploy a workload is always a discrete one. That is, one can deploy a workload, e.g., on node 5 or on node 6, but not on node 5.5 or on node 5.14159. By establishing valid candidate configurations and testing them, the problem that continuous optimization algorithms might create invalid configurations is avoided.

An arbitrary trade-off may now be selected between
- the effort to intelligently choose new candidate configurations,
- the coverage of the search space of candidate configurations, and
- the quality of the finally achieved optimum, in terms of the figure of merit.

For example, a very simple implementation that does not require much effort may obtain new candidate configurations by rastering through search space in a systematic manner, or by randomly sampling these configurations from a distribution. Given a certain budget of evaluations of the merit function, this may already produce a final configuration that performs better than what a human could devise. By investing more effort into intelligently choosing new candidate configurations, e.g., by taking past values of the merit function into account when choosing the next candidate configurations, a better optimum may be obtained given the same budget of evaluations of the merit function.

A change of the topology of the compute nodes, which may be detected in any suitable manner, may trigger a new optimization with new candidate configurations that are based on the changed topology. That is, the method may work in an adaptive manner in the sense that if the topology changes, the deployment is re-evaluated. For example, some compute nodes might be temporary unavailable because they (or their network connectivity) is down for maintenance. A plant operator may also decide to add new compute nodes at times of peak usage, or to spin down compute nodes to save energy during hours where electricity spot prices are highest.

The consideration of data availability need not be limited to a requirement in the set of requirements for resources and a corresponding availability on compute nodes. Rather, data availability may also be considered in the computation of the figure of merit. For example, data availability may be measured in a path length (e.g., measured in network hops) between the compute node executing the workload and the data source. Optimization of the candidate configuration may then, for example, be guided by an optimal path finding algorithm that determines the shortest path. The optimal path finding algorithm may, for example, work based on the outcome of a topology analyzer that extracts the latest plant and network topology information from the industrial plant.

In particular, if data is already available on one compute node for one workload, and this data is also needed for another workload, this may increase the figure of merit of running this other workload on the compute node that already has the data. Thus, data availability may have a direct say as to which workloads are combined on which compute node.

One example of a large industrial plant where data availability is very important for analytics workloads is a paper plant in Changshu, China. The DCS automation system of this plant provides process control of the pulper, the size press, the pope real, the winder, and the operation of the paper mill from a central control room. A classification system can recognize the fine defects in the moving paper and collect them in a database for fine tuning. Such a system consists of 26 controllers, 6,000 I/O devices (230 I/O per controller), and 9 operator stations. An analytics solution deployed on the hierarchal edge is not always optimal due to the various requirements of the analytics tasks. For example, deploying a task that only requires local data on a higher-level edge, or a task that requires high resource availability on a lower-level edge is not optimal. Optimization may be needed in several situations including creation of a new solution, change of execution parameters, change of topology, change of security requirements, change of priorities, and failing local solution.

A human user, e.g., the plant operator or the edge administrator, specifies the (analytics) task to be deployed including its constraints, e.g., the required data inputs as well as further task-related metadata, within an Edge Management Portal.

The Higher-Level Edge receives the information from the Edge Management Portal and extracts (i.e., restores from memory or computes based on existing connections) the plant and network topology. For this, the higher-level edge queries the lower-level edges for lists of field devices connected to them. The list can be provided in a JSON schema format where the collection of edge nodes together with their metadata including physical and system specification, operating system, and I/O modules are stored as properties. With this list comes the information which kind of data is delivered by which device, as well as the current state and health (e.g., load) of each edge node. Based on all this information, the higher-level edge can run an analysis to generate recommendations for the optimal edge nodes where a task can be deployed. This involves many considerations, including finding the shortest paths between data sources and potential targets, under consideration of the topology information and the task metadata and all potential further constraints. More information of this step is given below. Afterwards, a deployment will be triggered by the operator according to the best-found deployment option and the corresponding lower-level edges will be assigned to realize the deployment, i.e., to install and start the task. If, at a later point in time, any change in the topology is detected, e.g., an added or removed field device or edge node, the higher-level edge will be triggered to update its topology information and (partially) recalculate the solution, if needed.

Thus, the proposed system takes metadata of the current task(s) to be deployed as well as the plant topology including the current state of connected devices and edge nodes as inputs. The task metadata may include the location and kind of source data required by the task, as well as additional characteristics, e.g., time-criticality for highfrequency analytics, or other ways of criticality which may require the redundant deployment of tasks. The current state of the edge nodes may include their CPU utilization, free memory, or further health-related Key Performance Indicators.

Based on these inputs, an optimal deployment option for a task will be computed automatically and result in a criticality-aware, data-aware, and health-aware edge task deployment. The dynamics of the topology are taken into account by monitoring the network and recalculating the proposed deployment solution on demand so that the system becomes self-adaptive with respect to the deployment of tasks.

The system uses the information of this model including task requirements and network topology to perform subtasks divided into the following three modules:
- Topology Analyzer:
   ∘ Consider current load and health of the edge nodes
   ∘ Consider the hops and connections between the edge nodes
   ∘ Consider that there might be alternatives to get specific data (multiple devices partially delivering the same data)

- Task Analyzer:
   ∘ Consider decomposing the task, if possible, and distributing it among multiple edge nodes, finding the most appropriate deployment for the subtasks and then for aggregation
   ∘ Consider deploying the task on multiple edge nodes for redundancy, e.g., if it is very critical
   ∘ Consider particular requirements of a task for deployment, e.g. a task can be optimal to be deployed on location A for speed efficiency while it can be optimal on location B for backup
- Optimal Path Finder:
   ∘ Consider the results from Topology and Task Analyzers
   ∘ Determine the edge with the least number of hops/connections to reach all relevant devices/data (graph algorithms) - deploy the task there
   ∘ Do (potentially partial) recalculation of the setup as soon as something in the plant changes (device malfunctioning, additional edge installation, ...)

In one extension of the system and the method, decomposition techniques may be applied to decompose the given task into sub-tasks to enable distributed deployment based on the input and outputs of each subtasks, to potentially improve the deployment.

In another extension, lower-level edge nodes may be empowered to come up with their own local solutions for the deployment problem, e. g. in case communication with the higher-level edge may be restricted.

In another extension, the system may consider that there is not only one optimal solution for the deployment but, depending on the different targets, like low-latency, criticality, or load balancing, there may be a trade-off between multiple pareto-optimal solutions. In that case the system could either recommend multiple solutions to the human user and describe their advantages and disadvantages compared to each other; or may decide for the best solution based on (configurable) weights.

The benefits of the proposed system and method are that the human operator is relieved from the concrete details of finding a good deployment for the tasks to be installed. At the same time, the analytics tasks will deliver faster results, which will lead to more productive processes on the plant. Furthermore, the edge network on the plant will become more stable due to improved load-balancing, which makes the execution of the plant processes more reliable.

In a particularly advantageous embodiment, the available working classes comprise at least:
- a hot working class for workloads that are to be retained in random access memory, RAM, of the compute node after execution;
- a warm working class for workloads that are to be moved from RAM to a cache memory of the compute node, wherein the access time of said cache memory is slower than the access time of the RAM but faster than the access time of mass storage used by the compute node; and
- a cold working class for workloads that are to be retained neither in RAM nor in the cache memory of the compute node after execution.

This three-tier system corresponds to the main classes of access times available on a compute node. Typically, the difference in access times between cache memory and mass storage is much larger than the difference between RAM and cache memory.

In a further particularly advantageous embodiment, resource availability of compute nodes is discretized into availability classes comprising at least:
- a cold availability class indicating that a high amount of resources is available;
- a warm availability class indicating that a moderate amount of resources is available; and
- a hot availability class indicating that a low amount of resources is available.

This discretization facilitates the search for optimal candidate configurations because it reduces the number of possibilities that need to be tested by evaluating the figure of merit. Moreover, in combination with the tree-tier assignment of workloads into "hot", "warm" and "cold", the establishing of candidate configurations may comprises assigning workloads to compute nodes according to a diffusion law where a temperature differential between working classes and availability classes acts as a driving force for the attraction of workloads by compute nodes. That is, the flow moves from warmer to colder, with an intensity that is dependent on the magnitude of the temperature differential. An assignment in this manner is particularly explainable and comprehensible because similar diffusion laws apply to diffusion of particles in Physics.

As discussed before, the resource availability need not be purely dictated by physical availability of resources on a node. Rather, administrative decisions may also go into the availability. For example, certain compute nodes may be made available only to certain requesters, or an administrator may limit the number of workloads running on a node even though more resources would, in principle, be available.

In a further particularly advantageous embodiment, the figure of merit is dependent at least in part on:
- spin-up times that compute nodes require to instantiate execution environments for workloads; and/or
- data transfer times for input data needed by workloads to compute nodes executing the workloads.

It is mainly dependent on these quantities how much time will be saved by retaining a workload in memory for later use. In a toy example, when self-hosting the Stable Diffusion image generation model on a compute instance, generation of the first image after starting the instance may take several minutes because the 7 GB of model parameters first need to be loaded from mass storage. But when the program is called again on the same instance, the big file with the model parameters is still available from disk cache in RAM. Therefore, without having done anything differently from the first call of the program, the second and any subsequent image will be delivered after only little more than the pure computation time of about one minute.

In a further particularly advantageous embodiment, at least one new candidate configuration is computed based on a history of at least one candidate configuration and the figure of merit computed for this candidate configuration. That is, the new candidate configuration is not generated from scratch, but it is evolved on past experience. This improves the convergence of the method towards an optimal configuration. That is, given a budget of iterations and evaluations of the figure of merit, the end result will come closer to the global optimum. As discussed before, an improvement over the previous manual assignment of workloads to compute nodes is already achieved long before the global optimum is reached.

In particular, the at least one new candidate configuration may be determined by means of an evolutionary algorithm. That is, the new candidate configuration may be generated from previous candidate configurations by crossbreeding, mutation and selection according to the figure of merit. This strengthens the tendency that good properties of previous candidate configurations will be preserved.

In a particularly advantageous embodiment, the given workloads are executed on the given compute nodes according to the determined optimal configuration. In this manner, the advantages promised by the figure of merit are put into practice. For orchestrating the execution, any suitable orchestration framework, such as Kubernetes, may be used.

In a further particularly advantageous embodiment, during execution of the workloads, the resource requirements of at least one workload, and/or the resource availability on at least one compute node, and/or the topology of available compute nodes, are monitored. In response to a change in the resource requirements, and/or in the resource availability, and/or in the topology, meeting a predetermined criterion, at least one new candidate configuration may be established based on the changed resource requirements, on the changed resource availability, and/or on the changed topology. In this manner, the configuration will adapt itself to said changes. For example, when new compute nodes are brought online, this capacity will be used to the greatest advantage with respect to the figure of merit. Also, when compute nodes or their network connectivity go down unexpectedly, the negative impact on the figure of merit may be minimized.

The online monitoring may also be used to decide whether adding a new compute node will improve the performance, in the manner of a "what-if" simulation. Thus, in a further particularly advantageous embodiment, at least one new candidate configuration comprises at least one further compute node on top of the given set of compute nodes. If it then turns out that the new candidate configuration with the further compute node is a new optimal configuration, the new compute node can then be onboarded to the given set of compute nodes. The given workloads can then be executed on this new set of compute nodes according to the determined new optimal configuration.

In a further particularly advantageous embodiment, at least one workload comprises executing a trained machine learning model. Such models belong to the workloads that are often used time and time again in order to obtain insights from online monitoring data gathered in industrial plants. As discussed above, complex machine learning models have very large parameter sets that take time to load from mass storage. Also, the execution of machine learning models frequently requires the installation of software frameworks, which adds to the time required for starting up an execution environment for the machine learning model.

The proposed serverless framework classifies the machine learning models based on a set of quality of service parameters. For instance, one can consider resource consumption, rate of requests, types of deployments (streaming, batch, or on-demand), security policies, and network performance requirements. Thereby the classification can be used to decide on the optimal edge node that can be used to run such models.

Edge nodes can also be classified by the serverless framework based on the tasks, resource availability, infrastructure specification, authorizations, topology, etc. to decide which and how many ML models should be deployed on a particular edge.

The system and method presented here may automatically distribute ML tasks on the edge nodes in a hierarchical edge cluster. This is done by classifying ML tasks and edge nodes and assigning each class of tasks to a class of nodes. The classification of machine learning tasks is done based on their quality demands such as resource consumption, rate of requests, types of deployment, security concerns, and network performance requirements. The classification of edge nodes is done based on their availability, specification, authorities, response time to the server, and the topology of the cluster.

Deployment of ML model involves packaging of trained serialized ML model as well as the code to preprocess the input data and thereby serve the preprocessed data to the trained model. This packaging can be standardized, such that the input and outputs are clearly defined, and the code can thereby process the input data and generate the corresponding output.

Once the ML model is packaged it is usually deployed as a container on edge. This is done in different edge nodes without considering whether there are enough resources on the edge. Also, the containers are running and consuming compute resources even when there are no requests. This all could lead to deployment of containers on the edge with less resources and un-necessary consumption of compute resources.

One way to solve this issue is to carefully select the edge on which ML models can be deployed. And thereby also decide which ML models should always run as a service, or just kept-in memory for quick deployment in case a request comes in or just kept on disk and loaded in-memory on an incoming request.

So, the selection of suitable edge node and decision of ML model to run as a service or kept in memory or disk should be done automatically and continuously over the lifetime of edge and ML model.

This can, for example, be done in the following ways:
1a. In a (semi-)automated manner, using classification based machine learning techniques as and when enough data with labels is available, labeling/tagging the edge nodes based on following parameters:
   a. Number of tasks running
   b. Compute resources available
   c. Number of concurrent requests/responses to the edge node
1b. In a (semi-)automated manner, using classification based machine learing techniques as and when enough data with labels is available, tagging the machine learning models based on following parameters
   a. Compute resources required (CPU, Memory etc.)
   b. Number of times the machine learning model will be queried (streaming, batch, event based)

The above-mentioned steps can be done in the starting or in the commissioning of edge and machine learning models. But in operation, the infrastructure related data can be recorded and thereby analyzed to understand the dynamic behavior of usage of the edge and machine learning model and thereby changing the labels and tags of machine learning model. With this data, it can also be predicted, what would be the status of resources in the next hours/days and thereby deployment of machine learning models can be optimized on different edges.

One exemplary overall procedure is as follows:
1. The machine learning model package is registered in the machine learning model registry present in the edge management portal.
2. Configuration is provided from the dashboard about the machine learning model by answering the following questions such as
   a. Compute resources required by the machine learning model
   b. If the model needs to be always deployed or dynamically changed
   c. Streaming/batch/event-based inferences
   These questions can help to tag/label the machine learning models initially and these tags are decided by the analytics engine based on the answers for the questions. Same configuration can be done for different edge nodes by answering the following questions such as:
   a. Number of tasks running on the edge node/devices
   b. Computer resources available
3. Using the answers from step 2, analytics model can decide the tags for machine learning models in the machine learning model registry and also keep a label database for edge nodes/devices. These values are distributed among other analytics engine, model registry and serverless executors in distributed edge nodes/devices or hierarchal edge
4. Whenever requests are made serverless executor acts as a load balancer and tries to locate the requests for the machine learning models and edge nodes, it is deployed to and passes the request to the relevant models. Analytics engine over the period of time looks at the data consisting of requests, compute resource usage and number of tasks on the edge nodes/devices and machine learning models and dynamically schedule the machine learning model deployments on different edge nodes/devices
5. Dashboard can be used to see where the models are currently deployed and tags/labels for individual machine learning models and edge nodes/devices.

As discussed above, the repeated execution of data analytics workloads is frequently required for the online monitoring of industrial plants. Also, in such industrial settings, a large amount of data may accrue, so data availability is much of an issue in such settings. Therefore, in a further particularly advantageous embodiment, at least one workload comprises processing input data that is indicative of the operating state of an industrial plant from a distributed control system, DCS, of the industrial plant into an indicator of the quality of at least one product produced by the industrial plant. In particular, as in the example of the paper plant presented above, small problems during manufacturing may be detected before they become large problems.

In particular, the indicator of the quality may be fed back to the DCS. The DCS may the steer the industrial plant with the goal of improving the indicator of the quality. In this manner, any problems may not only be detected, but actively remedied.

Because it is computer-implemented, the present method may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

### DESCRIPTION OF THE FIGURES

In the following, the invention is illustrated using Figures without any intention to limit the scope of the invention. The Figures show:
Figure 1: Exemplary embodiment of the method 100 for orchestrating the execution of a given set of workloads 11-16 on a given set of compute nodes 21-23;
Figure 2: Exemplary deployment of the method 100 in a hierarchical edge system 7 of an industrial plant 6;
Figure 3: Exemplary orchestration of a new workload T(FT1) in a hierarchical edge system 7 that is already busy with other workloads T(TT1) and T(Mo1).

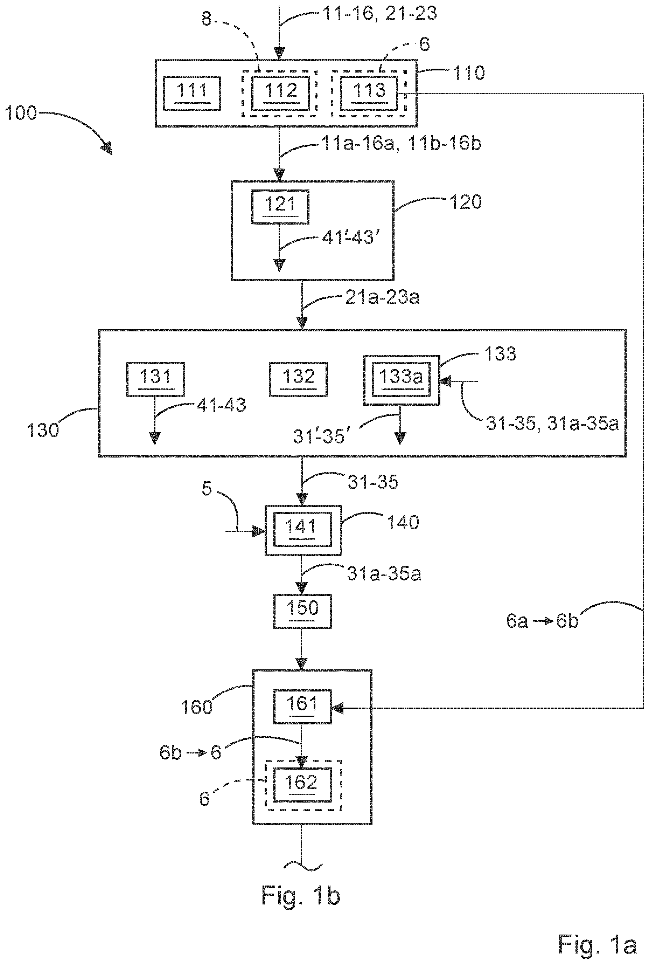

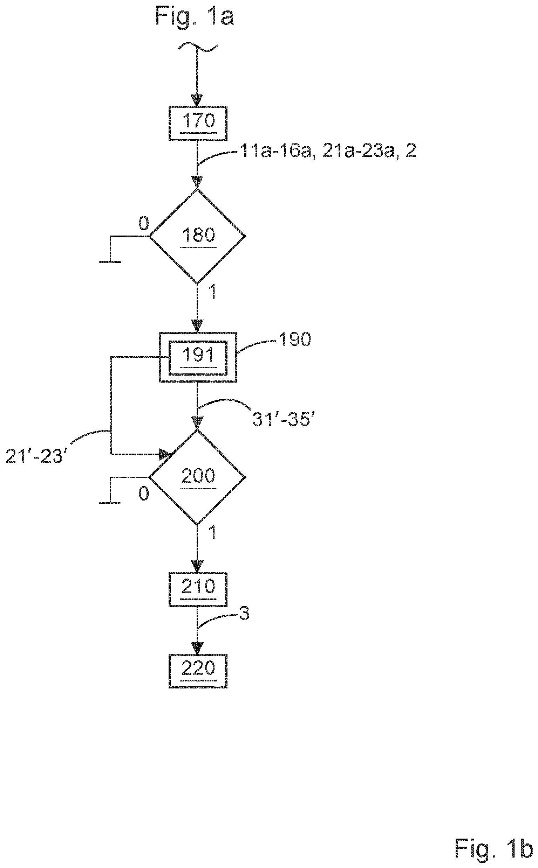

Figure 1 is a schematic flow chart of an embodiment of the method 100. The method 100 starts from a given set of to-be-orchestrated compute workloads 11-16 and a given set of compute nodes 21-23.

In step 110, for each workload 11-16, a set of requirements 11a-16a for resources needed for execution of the workload 11-16 is determined. The resources comprise at least memory. Also, for each workload 11-16, a frequency 11b-16b of usage is determined.

According to block 111, the resources needed for execution of the workload 11-16 may further comprise network communication resources and/or input data to be processed by the workload 11-16.

According to block 112, at least one workload 11-16 may comprise executing a trained machine learning model 8.

According to block 113, at least one workload 11-16 may comprise processing input data 6a that is indicative of the operating state of an industrial plant 6 from a distributed control system, DCS, of the industrial plant 6 into an indicator 6b of the quality of at least one product produced by the industrial plant 6.

In step 120, for each compute node 21-23, an availability 21a-23a of the resources required by the workloads 11-16 is determined.

According to block 121, resource availability 21a-23a of compute nodes 21-23 may be discretized into availability classes 41'-43' comprising at least:
- a cold availability class 41' indicating that a high amount of resources is available;
- a warm availability class 42' indicating that a moderate amount of resources is available; and
- a hot availability class 43' indicating that a low amount of resources is available.

In step 130, multiple candidate configurations 31-35 are established. Each such candidate configuration 35 comprises an assignment of each compute workload 11-16 to at least one pair of a compute node 21-23 and a working class 41-43, such that the resource requirements of all workloads 11-16 are satisfied. Different working classes 41-43 differ at least in the degree of retention of the compute workload 11-16 in memory and/or in at least one cache of the compute node 21-23 after execution.

According to block 131, the available working classes 41-43 may comprise at least:
- a hot working class 41 for workloads 11-16 that are to be retained in random access memory, RAM, of the compute node 21-23 after execution;
- a warm working class 42 for workloads 11-16 that are to be moved from RAM to a cache memory of the compute node 21-23, wherein the access time of said cache memory is slower than the access time of the RAM but faster than the access time of mass storage used by the compute node 21-23; and
- a cold working class 43 for workloads 11-16 that are to be retained neither in RAM nor in the cache memory of the compute node 21-23 after execution.

According to block 132, the establishing of candidate configurations may comprise assigning workloads 11-16 to compute nodes 21-23 according to a diffusion law. Such a diffusion law stipulates that a temperature differential between working classes 41-43 and availability classes 41'-43' acts as a driving force for the attraction of workloads 11-16 by compute nodes 21-23.

According to block 133, based on a history of at least one candidate configuration 31-35 and the figure of merit 31a-35a computed for this candidate configuration, at least one new candidate configuration 31'-35' may be computed. In particular, according to block 133a, this at least one new candidate configuration 31'-35' may be determined by means of an evolutionary algorithm.

In step 140, for each candidate configuration 31-35, at least one figure of merit 31a-35a with respect to at least one given optimization goal 5 is computed.

According to block 141, the figure of merit 31a-35a may be dependent at least in part on:
- spin-up times that compute nodes 21-23 require to instantiate execution environments for workloads 11-16; and/or
- data transfer times for input data needed by workloads 11-16 to compute nodes 21-23 executing the workloads 11-16.

In step 150, a candidate configuration 31-35 with the best figure of merit 31a-35a is determined as the optimal configuration 3.

In step 160, the given workloads 11-16 are executed on the given compute nodes 21-23 according to the determined optimal configuration 3.

According to block 161, if an indicator 6b of the quality of at least one product produced by an industrial plant 6 has been computed, this indicator 6b may be fed back to the distributed control system, DCS, of the industrial plant 6. According to block 162, the DCS may then steer the industrial plant 6 with the goal of improving the indicator 6b of the quality.

In step 170, during execution of the workloads 11-16, the resource requirements 11a-16a of at least one workload 11-16, and/or the resource availability 21a-23a on at least one compute node 21-23, and/or the topology 2 of available compute nodes 21-23, are monitored. Optionally, the frequency 16b-16b of usage may be monitored as well.

In step 180, it is determined whether the monitored quantities exhibit a change that meets a predetermined criterion. If this is the case (truth value 1), in step 190, at least one new candidate configuration 31'-35' is established based on the changed quantities.

In particular, according to block 191, at least one new candidate configuration 31-35 may comprise at least one further compute node 21'-23' on top of the given set of compute nodes 21-23.

In step 200, it is checked whether the new candidate configuration 31'-35' with the further compute node 21'-23' is a new optimal configuration 3. If this is the case (truth value 1), in step 210, the new compute node 21'-23' is onboarded to the given set of compute nodes 21-23. In step 220, the given workloads 11-16 are executed on this new set of compute nodes 21-23 according to the determined new optimal configuration 3.

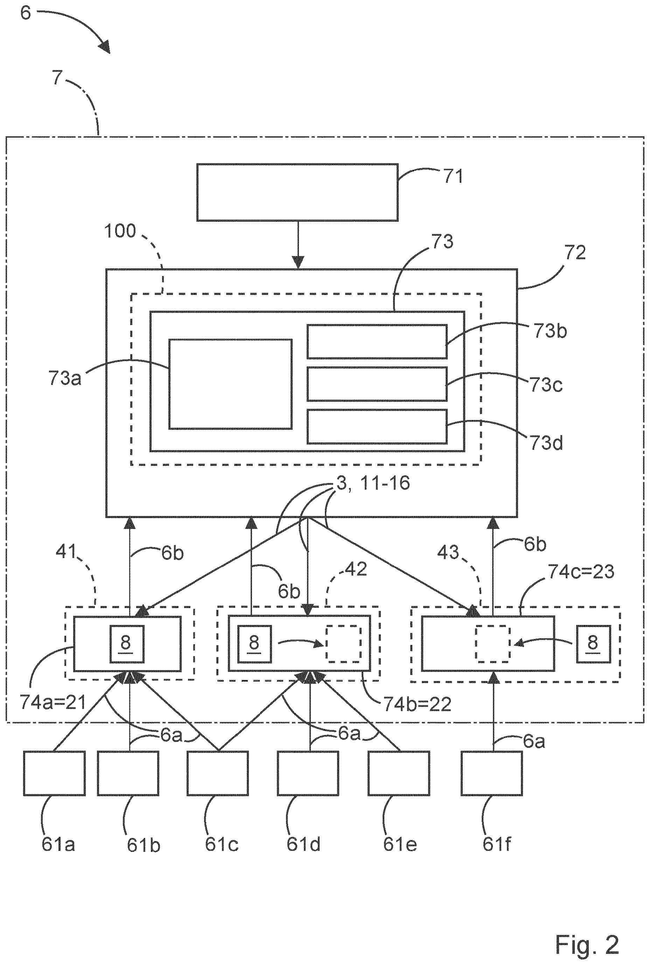

Figure 2 illustrates an exemplary deployment of the method 100 in a hierarchical edge system 7 of an industrial plant 6.

The hierarchical edge system 7 comprises an edge management portal 71 that may be accessed by a human operator, a higher-level edge 73 for orchestrating the execution of workloads 11-16, and lower-level edges 74a-74c for executing the workloads 11-16. The lower-level edges 74a-74c get input data 6a from field devices 61a-61f of the industrial plant 6 and correspond to compute nodes 21-23 for executing the workloads 11-16.

On the higher-level edge 2, a system 73 for optimized tasks deployment according to the method 100 is implemented. Based on a master task deployment model 73a, the optimal configuration 3 for executing workloads 11-16 is determined. To this end, the topology 2 of the industrial plant 6 and its network is analyzed by a topology analyzer 73. In particular, the state of health of compute nodes 21-23, hops and connections between edge nodes 74a-74c, and alternative sources for particular data are considered.

A task analyzer 73c analyzes requirements for executing workloads 11-16, including a possible splitting up of workloads 11-16 for execution on multiple compute nodes 21-23, requirements for redundancy, or requirements for special features (such as backup).

An optimal path finder 73d determines the optimal edge node 74a-74c to run each workload 11-16, with a strong emphasis on data availability in the figure of merit 31a-35a that it attributes to each candidate configuration 31-35 internally.

In Figure 2, the execution of three workloads 11-16 that each comprise a machine learning model 8 is exemplarily shown.

On edge node 74a, a very frequently used first machine learning model 8 is executed in the "hot" working class 41 and constantly kept in memory.

On edge node 74b, a less frequently used second machine learning model 8 is executed in the "warm" working class 42. After execution, this machine learning model 8 is kept in a cache of the edge node 74b. For the next execution, it needs to be loaded back from cache to memory.

On edge node 74c, a seldomly used machine learning model 8 is executed in the "cold" working class 43. After execution, this machine learning model 8 is kept neither in memory or in cache. For the next execution, it needs to be loaded back from mass storage into memory.

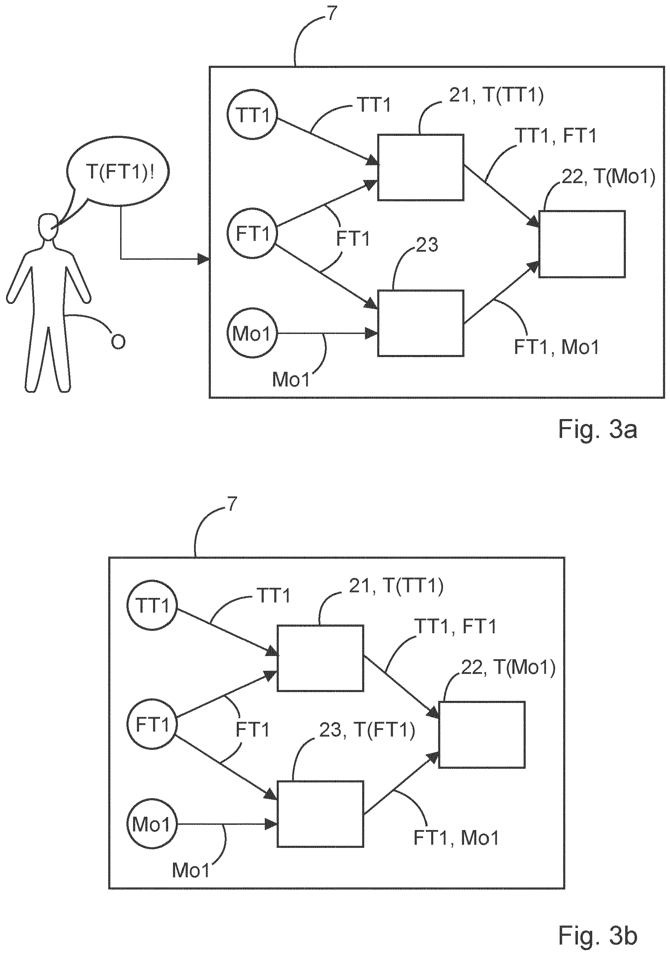

Figure 3 shows a toy example of how a new workload may be orchestrated in an edge system 7 that is already busy with other workloads.

The edge system 7 comprises three compute nodes 21, 22 and 23. First data TT1 is available on compute nodes 21 and 22. Second data FT1 is available on compute nodes 21 and 22 as well. Third data Mo1 is available on compute nodes 22 and 23.

In the situation shown in Figure 3a, the edge system 7 is already busy with two workloads. The first workload T(TT1) needs the data TT1 and has been orchestrated to run on the compute node 21 where this data TT1 is readily available. The compute node 21 is closest to the source of the data TT1. The second workload T(Mo1) needs the data Mo1. This data Mo1 is available on compute nodes 22 and 23, so the workload T(Mo1) could run on either of the two. In the situation shown in Figure 3a, the workload T(Mo1) has not been orchestrated to run on compute node 23 that is closest to the source of the data Mo1, but rather on compute node 22 because this compute node 22 has other resources needed by the task T(Mo1).

Now an operator O is requesting that another workload T(FT1) be orchestrated to run in the edge system 7. The data FT1 is available on all compute nodes 21, 22 and 23. As it is shown in Figure 3b, the workload T(FT1) is assigned to the compute node 22 because this is currently in the "cold" state and has enough available capacity to execute this workload T(FT1).

### List of reference signs:

- 11-16: compute workloads
- 11a-16a: resource requirements of compute workloads 11-16
- 11b-16b: usage frequencies of compute workloads 11-16
- 2: topology of compute nodes 21-23
- 21-23: compute nodes
- 21a-23a: availability of resources on compute nodes 21-23
- 21'-23': new compute nodes
- 3: optimal configuration for deployment of compute workloads 11-16
- 31-35: candidate configurations for deployment of compute workloads 11-16
- 31'-35': newly generated candidate configuration 31-35
- 31a-35a: figures of merit for candidate configurations 31a-35a
- 41-43: working classes for workloads 11-16
- 41'-43': availability classes for resource availability
- 5: optimization goal
- 6: industrial plant
- 6a: input data, indicative of operating state of industrial plant 6
- 6b: indicator of quality of a product of industrial plant 6
- 61a-61f: field devices in industrial plant 6
- 7: edge system
- 71: edge management portal
- 72: higher-level edge
- 73: system for optimized tasks deployment
- 73a: task deployment model in system 73
- 73b: topology analyzer in system 73
- 73c: optimal path finder in system 73
- 74a-74c: lower-level edge nodes
- 8: machine learning model
- 100: method for orchestrating execution of workloads 11-16
- 110: determining requirements 11a-16a of workloads 11
- 111: including communication resources in requirements 11a-16a
- 112: choosing workload 11-16 with machine learning model 8
- 113: choosing workload 11-16 that processes input data 6a
- 120: determining resource availability 21a-23a on compute nodes 21-23
- 121: discretization of resource availability 21a-23a into classes 41'-43'
- 130: establishing candidate configurations 31-35
- 131: choosing particular working classes 41-43
- 132: assigning workloads 11-16 to nodes 21-23 using diffusion law
- 133: computing new configuration 31'-35' from old configurations 31-35
- 133a: using evolutionary algorithm
- 140: computing figures of merit 31a-35a
- 141: choosing figure of merit 31a-35a with particular components
- 150: determining optimal configuration 3
- 160: executing workloads 11-16 as per optimal configuration 3
- 161: feeding back indicator 6b to DCS of industrial plant 6
- 162: steering industrial plant 6 towards better quality
- 170: monitoring during execution of workloads
- 180: checking whether monitored quantities have significantly changed
- 190: establishing new candidate configuration 31'-35'
- 191: including new compute node 21'-23' in new configuration 31'-35'
- 200: checking whether new configuration 31'-35' is optimal
- 210: onboarding new compute node 21'-23'
- 220: executing workloads as per new configuration 31'-35'=:3

- FT1, TT1, Mo1: data needed for compute workloads
- T(FT1): workload that uses data FT1
- T(TT1): workload that uses data TT1
- T(Mo1): workload that uses data Mo1
- O: operator

## Claims

1. A computer-implemented method (100) for orchestrating the execution of a given set of compute workloads (11-16) on a given set of compute nodes (21-23), comprising the steps of:
• determining (110), for each workload (11-16), a set of requirements (11a-16a) for resources needed for execution of the workload (11-16), wherein the resources comprise at least memory, as well as a frequency (11b-16b) of usage;
• determining (120), for each compute node (21-23), an availability (21a-23a) of the resources required by the workloads (11-16);
• establishing (130) multiple candidate configurations (31-35), wherein each candidate configuration (31-35) comprises an assignment of each compute workload (11-16) to at least one pair of a compute node (21-23) and a working class (41-43), such that the resource requirements of all workloads (11-16) are satisfied, wherein different working classes (41-43) differ at least in the degree of retention of the compute workload (11-16) in memory and/or in at least one cache of the compute node (21-23) after execution;
• computing (140), for each candidate configuration (31-35), at least one figure of merit (31a-35a) with respect to at least one given optimization goal (5); and
• determining (150) a candidate configuration (31-35) with the best figure of merit (31a-35a) as the optimal configuration (3).

2. The method (100) of claim 1, wherein the resources needed for execution of the workload (11-16) further comprise (111): network communication resources and/or input data to be processed by the workload (11-16).

3. The method (100) of any one of claims 1 to 2, wherein the available working classes (41-43) comprise (131) at least:
• a hot working class (41) for workloads (11-16) that are to be retained in random access memory, RAM, of the compute node (21-23) after execution;
• a warm working class (42) for workloads (11-16) that are to be moved from RAM to a cache memory of the compute node (21-23), wherein the access time of said cache memory is slower than the access time of the RAM but faster than the access time of mass storage used by the compute node (21-23); and
• a cold working class (43) for workloads (11-16) that are to be retained neither in RAM nor in the cache memory of the compute node (21-23) after execution.

4. The method (100) of any one of claims 1 to 3,
wherein resource availability (21a-23a) of compute nodes (21-23) is discretized (121) into availability classes (41'-43') comprising at least:
• a cold availability class (41') indicating that a high amount of resources is available;
• a warm availability class (42') indicating that a moderate amount of resources is available; and
• a hot availability class (43') indicating that a low amount of resources is available.

5. The method (100) of claims 3 and 4, wherein the establishing of candidate configurations comprises (132) assigning workloads (11-16) to compute nodes (21-23) according to a diffusion law where a temperature differential between working classes (41-43) and availability classes (41'-43') acts as a driving force for the attraction of workloads (11-16) by compute nodes (21-23).

6. The method (100) of any one of claims 1 to 5,
wherein the figure of merit (31a-35a) is dependent (141) at least in part on:
• spin-up times that compute nodes (21-23) require to instantiate execution environments for workloads (11-16); and/or
• data transfer times for input data needed by workloads (11-16) to compute nodes (21-23) executing the workloads (11-16).

7. The method (100) of any one of claims 1 to 6, further comprising: computing (133), based on a history of at least one candidate configuration (31-35) and the figure of merit (31a-35a) computed for this candidate configuration, at least one new candidate configuration (31'-35').

8. The method (100) of claim 7, wherein the at least one new candidate configuration (31'-35') is determined (133a) by means of an evolutionary algorithm.

9. The method of any one of claims 1 to 8, further comprising: executing (160) the given workloads (11-16) on the given compute nodes (21-23) according to the determined optimal configuration (3).

10. The method of claim 9, further comprising:
• monitoring (170), during execution of the workloads (11-16), the resource requirements (11a-16a) of at least one workload (11-16), and/or the resource availability (21a-23a) on at least one compute node (21-23), and/or the topology (2) of available compute nodes (21-23); and
• in response to a change in the resource requirements (11a-16a), and/or in the resource availability (21a-23a), and/or in the topology (2), meeting a predetermined criterion (180), establishing (190) at least one new candidate configuration (31'-35') based on the changed resource requirements (11a-16a), on the changed resource availability (21a-23a), and/or on the changed topology (2).

11. The method (100) of claim 10, wherein at least one new candidate configuration (31-35) comprises (191) at least one further compute node (21'-23') on top of the given set of compute nodes (21-23).

12. The method of claim 11, further comprising: in response to determining (200) that the new candidate configuration (31'-35') with the further compute node (21'-23') is a new optimal configuration (3),
• onboarding (210) the new compute node (21'-23') to the given set of compute nodes (21-23); and
• executing (220) the given workloads (11-16) on this new set of compute nodes (21-23) according to the determined new optimal configuration (3).

13. The method (100) of any one of claims 1 to 12,
wherein at least one workload (11-16) comprises (112) executing a trained machine learning model (8).

14. The method (100) of any one of claims 1 to 13,
wherein at least one workload (11-16) comprises (113) processing input data (6a) that is indicative of the operating state of an industrial plant (6) from a distributed control system, DCS, of the industrial plant (6) into an indicator (6b) of the quality of at least one product produced by the industrial plant (6).

15. The method (100) of claim 14, further comprising:
• feeding back (161) the indicator (6b) of the quality to the DCS; and
• steering (162), by the DCS, the industrial plant (6) with the goal of improving the indicator (6b) of the quality.

16. A computer program, comprising machine-readable instructions that, when executed on one or more computers and/or compute instances, causes the one or more computers and/or compute instances to perform the method (100) of any one of claims 1 to 15.

17. A non-transitory machine-readable data carrier, and/or a download product, with the computer program of claim 16.

18. One or more computers and/or compute instances with the computer program of claim 16, and/r with the machine-readable data carrier and/or download product of claim 17.
